# EUROPEAN PATENT SPECIFICATION

(11) **EP 1 556 207 B1**
(45) Date of publication and mention of the grant of the patent: **05.04.2006**
(21) Application number: 02779796.8
(22) Date of filing: 28.10.2002
(51) Int. Cl.: B29D 30/32, B29D 30/24

(54) **METHOD AND APPARATUS FOR MANUFACTURING A PNEUMATIC TYRE FOR VEHICLE WHEELS**
VERFAHREN UND VORRICHTUNG ZUR HERSTELLUNG EINES FAHRZEUGREIFENS
PROCEDE ET APPAREIL DE FABRICATION DE PNEUMATIQUE DE ROUES DE VEHICULE

(43) Date of publication of application: 27.07.2005
(73) Proprietor: PIRELLI PNEUMATICI S.p.A., 20126 Milano (IT)
(72) Inventor: BOSIO, Gian, Luigi, I-26010 Bagnolo Cremasco (IT); COCOZZA, Alfredo, I-23100 Sondrio (IT)
(74) Representative: Giannesi, Pier Giovanni
(86) International application number: PCT/IB2002/004449
(87) International publication number: WO 2004/037523

(56) References cited:
- EP-A- 0 974 448
- EP-A- 1 174 253
- US-A- 4 214 940
- US-B1- 6 250 356

## Description

The present invention relates to a method of manufacturing tyres for vehicle wheels using a drum of the "unistage" type i.e. consisting of a single stage.

Tyres for vehicle wheels essentially comprise a carcass structure made up of one or more carcass plies that, in the most classic embodiments, have the respective inner circumferential edges turned up around annular inserts usually called "bead cores" and being part of annular reinforcing structures located at axially opposite positions in the regions usually identified as tyre "beads".

At a radially external position to the carcass ply or plies a belt structure is applied which comprises one or more belt layers radially superposed in succession. Radially superposed on the belt structure is a tread band of elastomer material. The outer sides of the carcass structure are also covered with respective sidewalls, also made of elastomer material.

It is to be pointed out that, to the aims of the present specification, by the term "elastomer material" it is intended a composition comprising at least one elastomer polymer and at least one reinforcing filler. Preferably, this composition further comprises additives such as cross-linking and/or plasticizing agents, for example. By virtue of the presence of the cross-linking agents, this material can be cross-linked through heating so as to form the final manufactured article.

Usually the tyre beads, and in particular the annular reinforcing structures integrated thereinto, are structured and shaped in a manner suitable for matching with the respective circumferential seats arranged on a rim with which the tyre must be associated, to ensure a steady connection between these two wheel components.

In more detail, coupling between each bead and the corresponding circumferential seat in the rim is of such a nature that the bead is constantly pushed, by effect of the tyre inflating pressure, against an abutment shoulder defining the axially external edge of the rim. At least in tubeless tyres, i.e. tyres devoid of an air tube, each circumferential seat for tyre engagement has a frustoconical surface, hereinafter referred to as "rim flange", having an extension converging towards the rotation axis on moving close to the equatorial plane of the tyre. Each bead, axially pushed away from the equatorial plane by effect of the inflating pressure, acts in axial thrust relationship against the respective rim flange so as to ensure a perfect tightness to the air contained in the tyre.

Recently, rims of new conception for vehicle wheels have been proposed in which the tyre bead engagement seats are of a substantially frustoconical V-shaped conformation having an extension on the whole converging towards the rotation axis away from the equatorial plane.

A method of building tyres that is widely used in the art is commonly known as a "two-stage process". In more detail, tyre manufacture first involves that one or more carcass plies are laid down on a first drum usually identified as "building drum" or "first-stage drum", to form a cylindrical sleeve. The annular reinforcing inserts to the beads are fitted on opposite end flaps of the carcass ply or plies, that are then turned up around the annular inserts themselves so as to enclose them in a sort of loop.

The carcass sleeve thus built is then transferred to a second drum, a so-called "shaping drum" or "second-stage drum" on which strips of elastomer material adapted to constitute the tyre sidewalls may have been already positioned.

Then shaping of the carcass into a toroidal configuration is carried out so as to couple it with an outer sleeve or crown sleeve (generally prepared separately), located at a centred position with respect to the carcass sleeve, comprising a belt structure and a tread band radially superposed thereon.

After the carcass structure has been shaped, appropriate expandable portions of the shaping drum consisting of lever systems or inflatable bags for example, give rise to an overturning action of said strips of elastomer material to apply said strips against the side surfaces of the carcass structure.

In a unistage process, all the above mentioned previous steps, i.e. building and shaping, take place on a single drum. In this case, often associated with this drum are auxiliary devices including transfer systems for example, for pre-assembling and transferring some semi-finished products (belt structure and tread band, for example) onto the drum itself.

EP 1 174 253 A2 discloses a unistage drum for producing a radial tyre for agricultural vehicles. The drum has a central fixed body to support a relatively thin central portion of the tyre carcass and two movable halves disposed on opposite sides of the central body to support respectively thicker side portions of the carcass; each half having a respective expandable bead-gripping device and being, at least along an outwardly projecting portion of the respective bead-gripping device, of a smaller diameter than the diameter of the central body so as to compensate for differences in thickness between the central portion and side portions of the carcass.

US Patent No. 4,214,940 discloses a turning-up device for a tyre building drum. The turning-up device comprises an arched support having at least three conical fin elements mounted thereon. Said elements are positioned progressively closer to an axial central line of the building drum in a rotation direction of the drum itself. A presser roller is rotatably mounted on the support at a position between said conical elements. The support is pivotally mounted on a pivot drive for rotation around an axis disposed at right angles with respect to the axial central line of the building drum. Pivot drive means is mounted on parallel guide means for movement in a direction parallel to the axial central line of the building drum.

US Patent 6,250,356 discloses a first-stage drum and a building method for making tyres. Said drum involves a body mounted on a central shaft and having a receiving surface for the semi-finished products to be assembled, the ends of which, of different diameters, hold retractable means capable of covering the end of the receiving surface of smaller diameter, and means to expand the drum towards two different expansion positions. The building method contemplates: using a first surface having ends of different diameter; moving towards said first surface, a second surface of almost the same diameter as the end of greater diameter for the purpose of covering the end of smaller diameter of the first surface and creating a generally cylindrical overall receiving surface; laying down a carcass reinforcement onto said overall surface; laying down a ring-shaped element made of rubber or metal onto each of the carcass reinforcement ends, respectively; contracting the second surface and expanding the first surface; turning upwardly each end of the carcass portion to be turned up around the corresponding ring-shaped element, respectively.

EP 974 448 also discloses a drum and a process of manufacturing the above mentioned Kind of tyres comprising bead cores and ring-shaped rubber profiles.

From the preceding statements it is possible to infer that generally in the bead structure of a tyre the ply is provided to be turned-up around a rigid annular insert (the above mentioned bead core) which is used to maintain anchoring of the tyre on the rim. To reach this result, the tyre is usually built in such a manner that the bead core itself, once locked to the ply, acts as an element around which wrapping of the ply itself takes place. In particular, as already mentioned, during the tyre building step, after the semi-finished products have been laid down on a first-stage drum or a drum of the unistage type, positioning of the bead cores is carried out so that the latter are axially internal to the outer side edges of the ply. The turning-up action is performed, by means of inflatable bags or mechanical devices, by pushing the ply portion axially external to the bead core towards the equatorial plane of the carcass. The Applicant has verified that this can take place due to the fact that the bead core, in spite of the load exerted by the expanded drum and the inflated bags or by the lever thrust, is able to keep in place the ply portion engaged by it.

The Applicant has therefore perceived that, if one wishes to make a tyre having the carcass ply turned up around an annular element, preferably of elastomer material (which tyre is particularly adapted for coupling with the previously illustrated rims of new conception) and a bead core placed on the completed turned-up portion of said ply, since arrangement of a ply turned up on filling elements is not provided, traditional turning-up devices lose their effectiveness. In fact, in this case it is no longer possible to exert high thrusts on the ply to avoid unevennesses in the turned-up portion because there is no more any rigid annular element that, being locked on the drum, exerts a retaining action on the ply avoiding every movement thereof.

Consequently, in the Applicant's perception, it is suitable to search for devices capable of turning up the carcass ply in the manner depicted above. More specifically, said devices, in order to accomplish their task, in the Applicant's opinion, keep the edges of said ply separated from the other semi-finished products disposed on said drum to enable turning up of the ply itself around said annular element. In addition, the turning up devices carry out turning up of said ply edges also without the aid of a rigid retaining element such as a bead core.

The Applicant has found that by using an element for separating at least one carcass ply portion from the other semi-finished products placed on said drum during building of the tyre, the flaps of said ply are turned up around a semi-finished product (preferably of elastomer material) by the only retaining reaction due to said semi-finished product and to adhesion of said ply to the region not concerned with the turned-up portion and therefore in contact with the other semi-finished products.

In a first aspect the invention relates to a method of manufacturing a tyre for vehicle wheels, said tyre comprising a carcass structure having at least one carcass ply operatively associated with a pair of annular reinforcing structures suitable for matching with a mounting rim, each annular reinforcing structure comprising at least one bead core and one annular element, said at least one carcass ply being turned up at least on one of said annular elements, said method comprising the steps of: feeding at least one semi-finished product onto a drum, placing at least one separating element to a position radially external to said at least one semi-finished product, feeding said at least one carcass ply onto said drum at a radially external position with respect to said at least one separating element, placing said annular elements to a position radially external to said carcass ply, turning up said carcass ply around said annular elements, removing said at least one separating element, applying said bead cores, applying a belt structure to said carcass structure at a radially external position, applying a tread band to said belt structure at a radially external position, shaping said tyre into a toroidal conformation.

In a further aspect the invention relates to a drum for manufacturing a tyre for vehicle wheels, said tyre comprising a carcass structure having at least one carcass ply operatively associated with a pair of annular reinforcing structures suitable for matching with a mounting rim, each annular reinforcing structure comprising at least one bead core and one annular element, said at least one carcass ply being turned up at least on one of said annular elements; said drum comprising at least: one central portion operatively associated with two side portions, at least one transport device for said bead cores, at least one pressure device adapted to consolidate the different semi-finished products with each other, at least one turning-up device for said carcass ply and a device adapted to radially modify the surface of said drum, wherein said turning-up device comprises at least one tubular separating element open at least at one end, externally associated with said drum.

Preferred embodiments of the invention are defined in the dependent claims.

Further features and advantages of the invention will become more apparent from the detailed description of some preferred but not exclusive embodiments of a method and an apparatus for manufacturing a tyre for vehicle wheels in accordance with the present invention.

Such a description will be set out hereinafter with reference to the accompanying drawings, given by way of non-limiting example, in which:
- Fig. 1 is a partial diagrammatic view in right section showing a tyre for vehicle wheels made in accordance with the invention;
- Figs. 2 to 13 are diagrammatic views in right section of the apparatus of the invention during some steps of the method in reference in accordance with a first embodiment;
- Figs. 14 to 17 are diagrammatic views in right section of the apparatus of the invention during some steps of the method in reference in accordance with a further embodiment;
- Fig. 18 is a partial view in vertical section of the apparatus of the invention;
- Fig. 19 is an overall view in vertical section of the apparatus in reference.

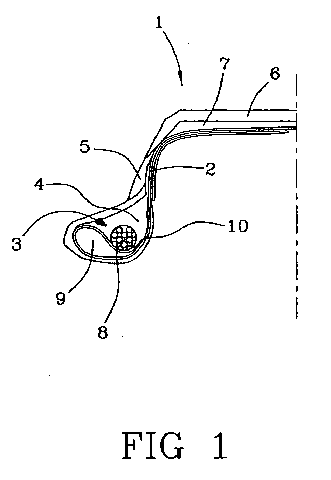

As shown in Fig. 1, tyre 1 built by the method in accordance with the invention comprises a carcass structure having at least one carcass ply 2, one annular reinforcing structure 3 for each bead and one pair of fillers 4 for said beads, said carcass structure being associated with at least one pair of sidewalls 5, one tread band 6 at a radially external position thereto, and one belt structure 7 placed between said carcass structure and tread band. Advantageously, for each annular reinforcing structure 3, provision is made for an annular bead core 8 (made of steel for example, following known methodologies) and an annular element 9, the cross-section outline of which substantially has a wedge-shaped conformation the base side of which is essentially parallel to the flange of a rim on which said tyre 1 is mounted. Said wedge at an axially external position thereof is adjacent to said bead core and its tapering end belonging to said base side is at a radially internal position with respect to said bead core 8. Said carcass ply 2 is preferably partly wound around said bead cores 8 whereas it is completely wound around said annular elements or wedges 9, ultimately presenting each end flap 10 in contact with the radially internal portion of the corresponding bead core 8. In accordance with a preferred embodiment, said annular wedges 9 are made of an elastomer material of a SHORE A hardness included between 80 and 110 degrees, preferably of 95 degrees.

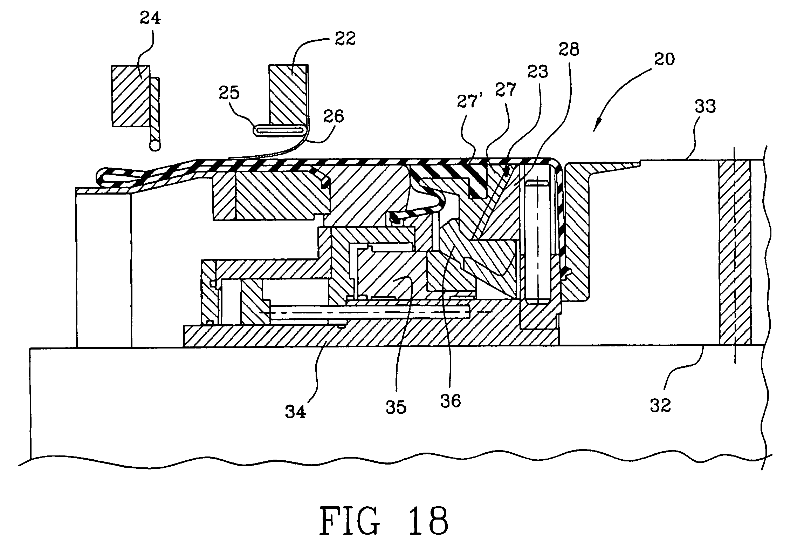

The apparatus of the invention (Figs. 18-19) to build and shape tyre 1 preferably consists of a drum 20 of the unistage type comprising a central portion 32 provided with a rigid cover 33 (at all events adapted to be dismantled for replacement with covers of different widths) and two axially opposite side portions 34 each provided with a radially expandable auxiliary bladder-like membrane.

The rigid cover 33 telescopically covers the axially internal ends of the side portions 34 of drum 20, so that in the starting building step a continuous cylindrical surface is created over the whole drum for deposition of the semi-finished products thereon.

Said drum 20 further comprises devices 24 adapted to carry a pair of said bead cores 8 therearound until a predetermined mutual distance is reached to enable the building steps better described in the following to be carried out. Movement required for transport is obtained by a preferably electric motor 40 for example, operatively associated with a driving screw 41 in turn connected to said devices 24.

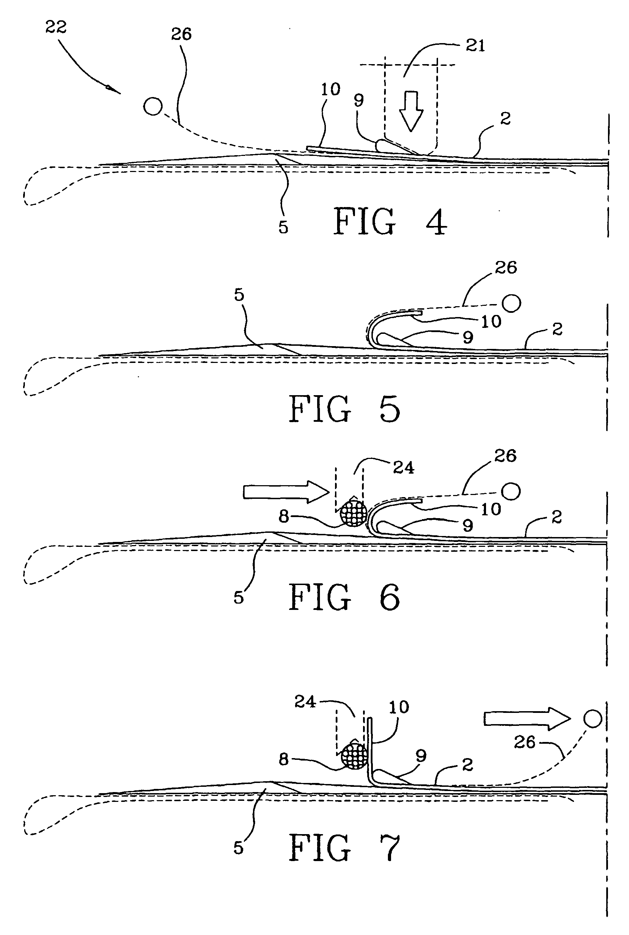

The concerned drum 20 further comprises a first pressure device that through a presser roller 21 (Fig. 4) acting on the annular wedges 9 carries out, as better illustrated in the following, consolidation of the adhesion between the carcass ply 2 and the underlying sidewalls 5 at the contact points of same; a second device 22 for loop-shaped turning up of the flaps 10 of said carcass ply around said annular wedges 9; and a third device 23 for outward radial displacement of wedges 9 once they have been surrounded by the carcass ply 2 loops, against the surface of the bead cores 8 supported by said transport devices 24, said third device being internal to the tubular surface of each of said auxiliary bladder-like membranes.

Advantageously, said transport devices 24 for bead cores 8 and said third device 23 for radial expansion are such arranged as to ensure stopping of the inner surface of each bead core 8 on at least one end portion of the turned-up flap of the carcass ply 2 around the corresponding wedge 9.

In a preferred embodiment, the concerned drum is provided with a further pressure device designed to act, as better illustrated in the following, on the flaps 10 of the carcass ply 2 formed around said wedges 9, said device being operatively associated with said second turning-up device 22. Said further pressure device is conveniently in the form of an inflatable bag 25 of annular shape, coaxial with said drum and of greater diameter than the latter, said bag being expandable during operation of said drum towards the drum surface.

As an alternative to the solution involving the inflatable bags 25, one or more presser rollers also associated with device 22, can be employed.

Preferably, said second device 22 is provided, close to each sidewall of said drum 20, with at least one tubular element 26 of smaller diameter than or the same diameter as said drum and coaxial therewith, said second device 22 being axially movable in both the drum directions and free to rotate around the drum axis.
The possibility of movement of said device 22 around the drum axis is particularly advantageous because it enables any rotating movement of said drum 20, as better shown in the following, not to alter the integrity of said tubular element 26 while the latter is associated with one or more of the semi-finished products during the tyre building process.

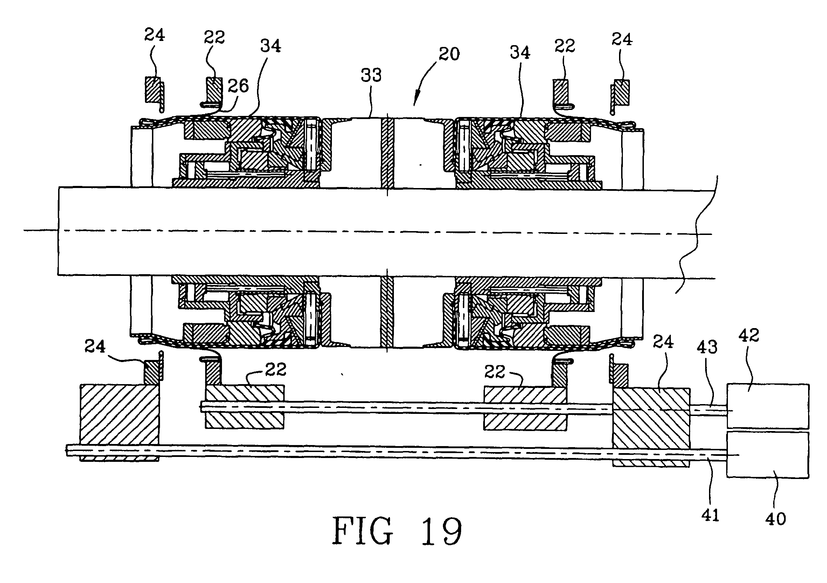

As better described in the following, in order to separate both the flaps 10 of axially external ends of the carcass ply 2, said turning-up device 22 is provided to be divided into two parts or halves each of which is placed at an axially external position on opposite sides with respect to said drum (Fig. 19). Preferably said turning-up device 22 is driven by a motor 42 operatively associated with a drive screw 43 controlling movement of said device.

Optionally, also provided is a radiated-off cord, comprising a plurality of thread-like elements circumferentially disposed around said tubular element 26, which cord when suitably operated carries out widening or release of the opening end of the tubular element 26 enabling fitting of same on drum 20 without any initial rubbing on the already present semi-finished products.

The tubular element is preferably made so as to have features of elasticity in a radial direction and substantial non-elasticity in a transverse direction. In addition, for making said tubular element 26, a fabric made of anti-adhesive material is preferably employed, said tubular element therefore performing a mechanical isolation, i.e. being a true separating element for the semi-finished products with which it comes into contact.

Preferably, but not exclusively, use of said third device 23 for displacement of said wedges 9 in a radially external direction comprises, on each side of the drum, first and second radial-expansion devices, 27 and 28 respectively, that are axially and radially movable with respect to each other by means of appropriate mechanisms. More specifically a piston 35, preferably of the air type, is operatively associated with a lifting wedge 36 in turn connected to said first radial-expansion devices 27 to operate movement of the latter. The return movement, on stopping of the thrust caused by said piston 35 is preferably carried out by elastic devices such as a spring ring or springs. Movement of said second radial-expansion devices 28 is controlled by a piston 37, preferably of the air type, operating a lifting wedge 38 in turn associated with said second devices 28. In this case too, elastic devices such as a spring ring or springs are provided for the return movement of said devices 28.

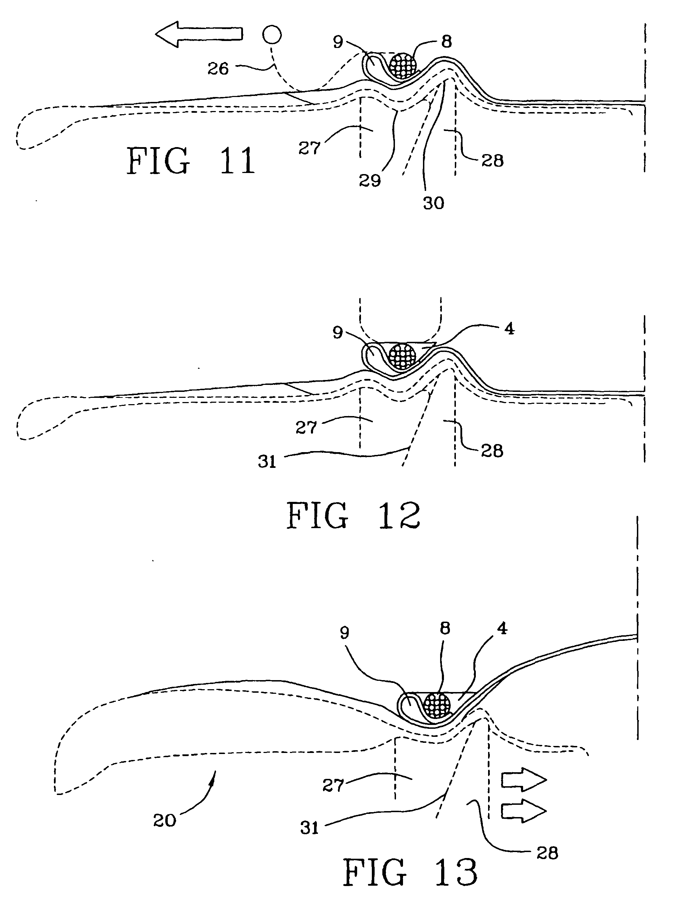

The first radial-expansion devices 27 are formed of a plurality of sectors the outermost surface of which, at least when said sectors are at a radially external position, creates a housing seat 29 with a concave surface, whereas said second radial-expansion devices 28 are preferably formed of a plurality of sectors the outermost surface of which terminates with a convex head 30 (Fig. 11). The sectors of said devices 27 and 28 in addition form, in the expanded configuration, a concave outer surface suitable to create the appropriate profile for deposition of fillers 4 and an appropriate axial-retaining action against sliding of bead core 8 and wedges 9 towards the inside of the drum.

It will be also appreciated that each radial-expansion device 27 can be made of a rigid material of one piece construction or, in a different embodiment (Fig. 18), it may be formed of two parts, the upper one 27' being preferably made of elastomer material to advantageously mitigate the concave surface of said housing seat 29. Substantially said upper part 27' enables a continuity surface formed of the first radial-expansion devices 27 to be obtained, said surface being advantageously suitable to maintain a substantially hermetic seal so as to allow the tyre to be shaped at the end of the tyre building process.

Said radial-expansion devices 27, 28 finally comprise contact surfaces 31 inclined with respect to each other.

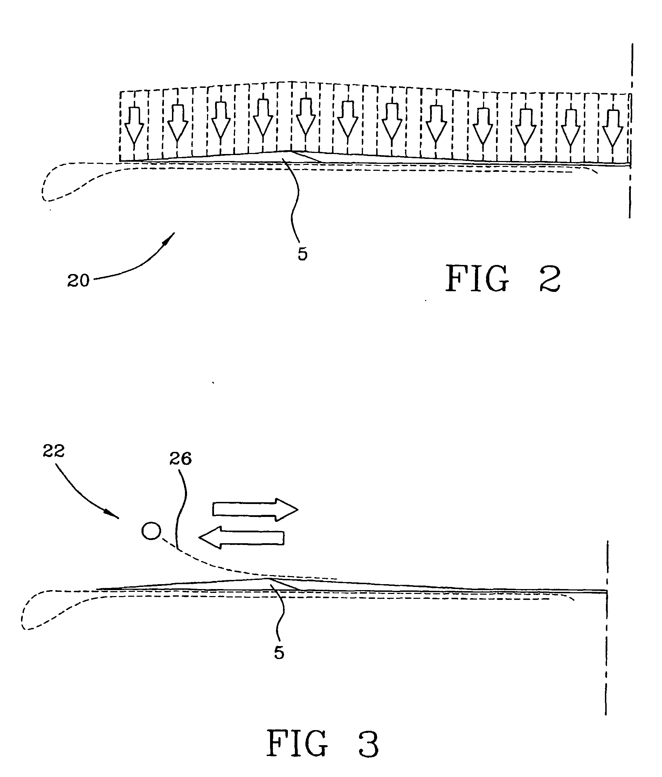

As shown in Figs. 2 and 3, the method of the invention at the beginning involves a first step in which while devices 23 are in a contracted configuration, a first semi-finished product is laid down on the radially external surface of said drum 20. Said semi-finished product preferably comprises a liner (i.e. that portion that when the tyre has been completed is at a radially internal position and is responsible for air-tightness in tubeless tyres) and the sidewalls. Optionally each sidewall may consist of two parts.

Once said semi-finished product is laid down on the drum and possibly maintained in place by the action of the vacuum applied from the inside of the drum, said turning-up device 22 in its halves is moved by said motor 42 in an axially internal direction relative to drum 20, preferably by a reciprocating motion of the to-and-fro type that enables the tubular elements 26 to be positioned so as to be wrapped around the above mentioned semi-finished product and leave the central region of the drum completely clear for deposition of the carcass ply 2 thereon. Positioning of the tubular elements is carried out depending on the point at which subsequently folding back of the carcass ply 2 onto the annular wedges 9 is wished to begin. Advantageously, since said tubular element 26 is made of an anti-adhesive textile material, the carcass ply 2 laid down after said first semi-finished product cannot adhere over the whole length thereof, to the pieces already present on the drum, but keeps mostly separated therefrom. As previously illustrated, in order to separate both the axially external end flaps 10 of the carcass ply 2, said turning-up device 22 is divided into two parts or halves: each of them therefore performs a to and fro movement which may also be non contemporaneous to cause partial wrapping of said tubular elements 26 around said drum.

As shown in Fig. 4, in a subsequent step of the concerned method, other semi-finished products are laid down on said drum at a radially external position, more specifically said carcass ply 2 and said annular wedges 9, close to each of said flaps 10 of the carcass ply 2. This operation can be carried out, as previously depicted, with the tubular elements 26 positioned on the drum due to freedom of rotation of said elements around the axis of the drum itself. In addition, optionally, use of the presser roller 21 may be provided to promote and consolidate adhesion between ply 2 and sidewalls 5 at the contact points of same, i.e. where said sidewalls are not covered with said tubular elements 26.

Subsequently, as shown in Fig. 5, a further forward movement (i.e. in an axially internal direction) of said turning-up device 22 enables one portion of each tubular element 26 to raise the respective flaps 10 starting wrapping of each of them around the corresponding annular wedge 9.

In a further step (Fig. 6), said transport devices 24 driven by said motor 40, carry out axial positioning of each bead core 8 by substantially placing each of them at a radially external position relative to each wedge 9 and
at a position substantially adjacent and axially external to the respective flap 10 partly turned up around said wedge 9.

Subsequently (Fig. 7) each tubular element 26 is slipped off by moving each half of device 22 inwardly in an axial direction, until it comes close to the transverse symmetry axis of said drum, which enables disengagement of each flap 10 from said device 22.

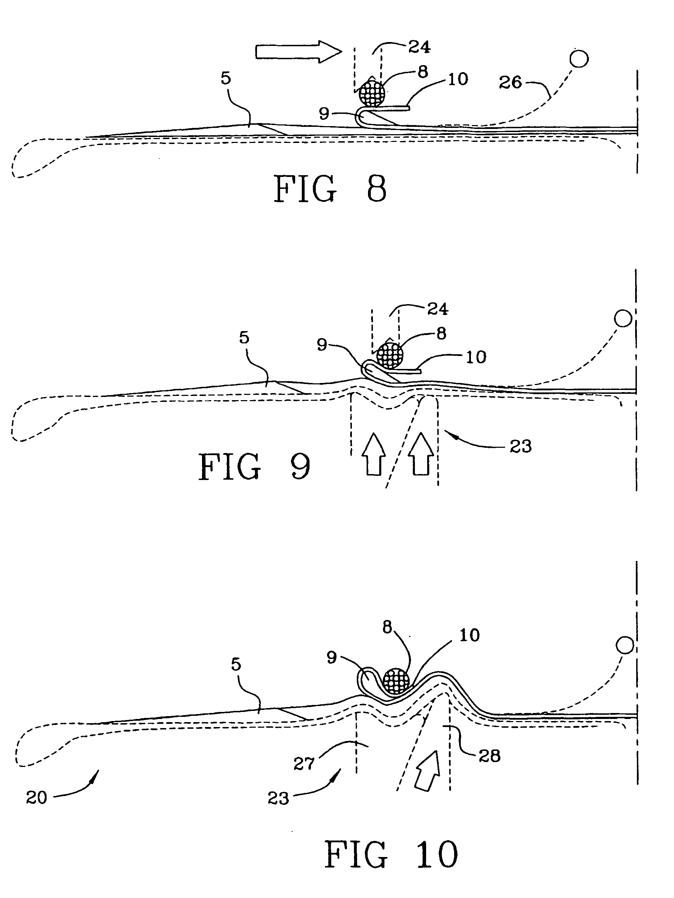

As shown in Fig. 8, each bead core - transport device 24 places said bead cores at a position radially external to each annular wedge 9, each flap 10 of said carcass ply 2 being interposed between said wedge 9 and bead core 8.

In a further step of the concerned method, as shown in Fig. 9, devices 23 are operated by pushing said wedges 9 and the underlying semi-finished products to a radially external direction, while each bead core 8 is kept stationary at a radial position by said transport devices 24.

Alternatively, said devices 24 may also be positioned slightly external to the final axial position of bead core 8 so that during the action of devices 23 in a radially external direction and the early disengagement of bead cores 8 from devices 24, the bead cores should slightly rub on flaps 10 of the carcass ply 2 carrying out a compressive and consolidating action of the loop before said bead cores occupy their final seat.

In the subsequent step, as shown in Fig. 10, as the devices 23 continue their action, a particular conformation of the semi-finished products hitherto laid down for tyre building is obtained. In detail, bead cores and wedges will substantially have the same radial position with each wedge placed at an axially external position with respect to the bead core, and each flap 10 will be completely wrapped around said wedge 9 and at a position radially internal to said bead core 8.

Fig. 11 shows a further step in which device 22 in its halves is brought back to a position axially external to said drum.

In the subsequent step illustrated in Fig. 12, with the aid of said devices 23, said fillers 4 are added to the tyre being built and in the above configuration.

Building of the tyre then goes on as shown in Fig. 13, acting by means of axial thrusts from said devices 23 and inflation of the auxiliary membranes of the side drum parts. The subsequent steps involving deposition of said belt structure 7 and tread band 6, and the final toroidal conformation of the green tyre ready for vulcanisation are substantially carried out as in known unistage building and shaping drums, in accordance with the so-called "overlying sidewall" or "underlying sidewall" II techniques following the specifications for the tyre to be obtained (which steps are substantially known in the art and therefore not illustrated).

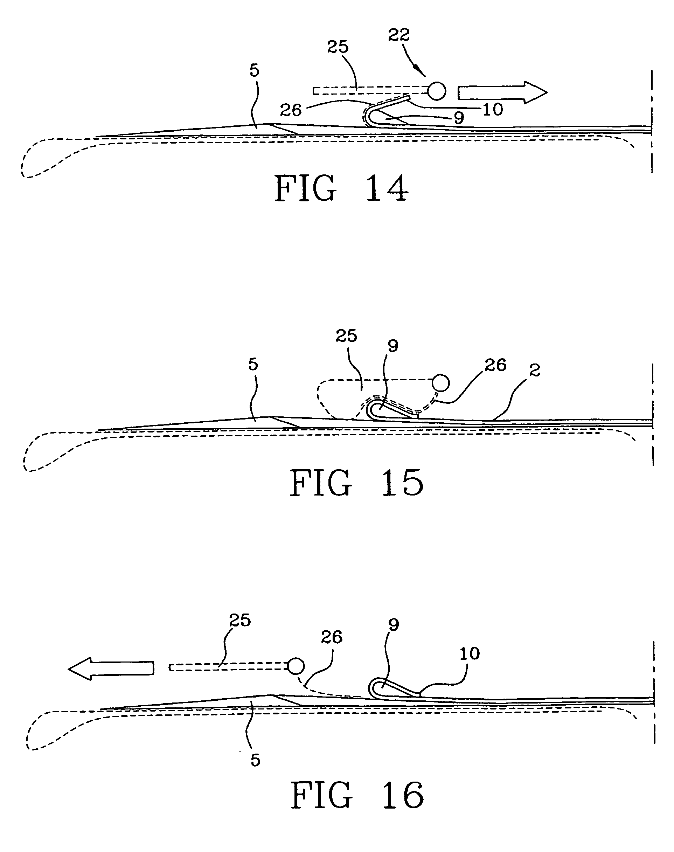

In an important alternative embodiment of the method in reference, the step shown in Fig. 14 is similar to that shown in Fig. 5, but in the last-mentioned case device 22 in each half is also provided, in addition to the tubular element 26, with an inflatable bag 25 which is brought to a position radially external to each annular wedge 9 and each flap 10.

In the subsequent step shown in Fig. 15, inflation of said bag 25 causes said flap 10 to be wrapped around said wedge 9, substantially carrying out and completing turning-up of each flap 10.

The subsequent step illustrated in Fig. 16 shows moving apart of the device 22 halves in an axially external direction, which causes the tubular elements 26 to slip off and the inflatable bags 25 to move away in a deflated condition.

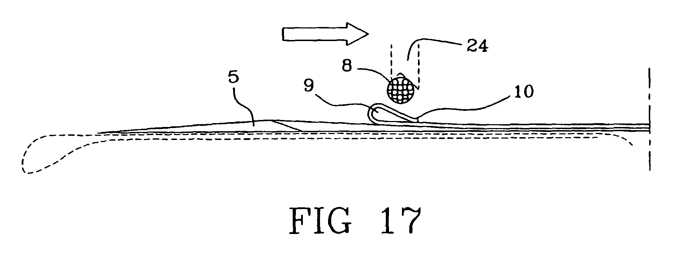

The further step of this alternative embodiment of the method in reference (Fig. 17) contemplates positioning of said bead cores 8 by said transport devices 24 to a position radially external to said flaps 10 wrapped up around said wedges 9.

Subsequently, the same configurations are determined as already discussed above for the steps of the preceding alternative embodiment of the method in reference depicted in Figs. 10, 12 and 13; finally, the same remarks as above can be made for final assembling of the belt structure and tread band and for the toroidal conformation of said tyre.

## Claims

1. A method of manufacturing a tyre for vehicle wheels, said tyre (1) comprising a carcass structure having at least one carcass ply (2) operatively associated with a pair of annular reinforcing structures suitable for matching with a mounting rim, each annular reinforcing structure comprising at least one bead core (8) and one annular element (9), said at least one carcass ply (2) being turned up at least on one of said annular elements (9), said method comprising the steps of: feeding at least one semi-finished product onto a drum (20), placing at least one separating element (26) to a position radially external to said at least one semi-finished product, feeding said at least one carcass ply (2) onto said drum (20) at a radially external position with respect to said at least one separating element (26), placing said annular elements (9) to a position radially external to said carcass ply (2), turning up said carcass ply (2) around said annular elements (9), removing said at least one separating element (26), applying said bead cores (8), applying a belt structure (7) to said carcass structure at a radially external position, applying a tread band (6) to said belt structure (7) at a radially external position, shaping said tyre (1) into a toroidal conformation.

2. A method as claimed in claim 1, wherein two separating elements (26) are placed on said semi-finished product by an axial movement directed from the outside to the inside from opposite ends of said drum (20) .

3. A method as claimed in claim 1, wherein radial superposition on said drum (20) between said first semi-finished product and said carcass ply (2) is consolidated at the contact points of same by a pressure device (21).

4. A method as claimed in claim 1, wherein said step of turning up said carcass ply (2) around said annular elements (9) contemplates an axial movement of said at least one separating element (26), to lift the flaps (10) of said carcass ply (2), causing each of said flaps (10) to be wrapped around the respective annular element (9).

5. A method as claimed in claim 4, wherein at the end of said axial movement of said at least one separating element (26), a step is provided during which each bead core (8) is placed to a radially external position with respect to each annular element (9) and to a position substantially adjacent and axially external to each of said flaps (10).

6. A method as claimed in claim 5, wherein the step of removing said at least one separation element (26) is followed by a step of carrying said bead cores (8) to a radially external position with respect to said annular elements (9), while each flap (10) is interposed between said bead cores (8) and elements (9).

7. A method as claimed in claim 6, wherein a step is provided for pushing said annular elements (9) and the underlying semi-finished products in a radially external direction, while each bead core (8) is maintained stationary in a radial position.

8. A method as claimed in claim 6, wherein a step is provided for pushing said annular elements (9) and the underlying semi-finished products in a radially external direction, while each bead core (8) rubs on the corresponding flap (10) carrying out a compressing and consolidating action of the turned-up portion of said carcass ply (2) around said annular elements (9).

9. A method as claimed in claim 7 or 8, wherein said pushing step in a radially external direction goes on until said bead cores (8) and annular elements (9) substantially take the same radial position, each annular element (9) being maintained to an axially external position with respect to the corresponding bead core (8), each flap (10) being wrapped around said annular element (9) and keeping a position radially internal to said bead core (8).

10. A method as claimed in claim 4, wherein the step of turning up each flap (10) around the respective annular element (9) is mainly carried out by inflation of at least one inflatable bag (25).

11. A method as claimed in claim 4, wherein the step of turning up each flap (10) around the respective annular element (9) is mainly carried out by means of presser rollers.

12. A method as claimed in claim 1, wherein said annular element (9) has a cross-section of elongate shape tapering at one end.

13. A method as claimed in claim 1, wherein said annular element (9) is of elastomer material.

14. A method as claimed in claim 1, wherein all said steps are carried out on said drum (20).

15. A drum for manufacturing a tyre for vehicle wheels, said tyre (1) comprising a carcass structure having at least one carcass ply (2) operatively associated with a pair of annular reinforcing structures suitable for matching with a mounting rim, each annular reinforcing structure comprising at least one bead core (8) and one annular element (9), said at least one carcass ply (2) being turned up at least on one of said annular elements (9); said drum (20) comprising at least: one central portion (32) operatively associated with two side portions (34), at least one transport device (24) for said bead cores (8), at least one pressure device adapted to consolidate the different semi-finished products with each other, at least one turning-up device (22) for said carcass ply (2) and a device (23) adapted to radially modify the surface of said drum (20), wherein said turning-up device (22) comprises at least one tubular separating element (26) open at least at one end, externally associated with said drum (20).

16. A drum as claimed in claim 15, wherein said pressure device comprises a presser roller (21) to consolidate adhesion between said carcass ply (2) and at least one semi-finished product disposed under it.

17. A drum as claimed in claim 15, wherein said turning-up device (22) is divided into two halves, each half being placed at an axially external position on opposite sides of said drum (20) and each half comprising said at least one tubular separating element (26) .

18. A drum as claimed in claim 17, wherein each of said halves is axially movable and free to rotate about the axis of said drum (20) .

19. A drum as claimed in claim 17, wherein each tubular element (26) is of the same diameter as, or of a lower diameter than said drum (20).

20. A drum as claimed in claim 17, wherein a plurality of circumferentially-disposed thread-like elements is provided around each tubular element (26).

21. A drum as claimed in claim 15, wherein a second pressure device is associated with said turning-up device (22).

22. A drum as claimed in claim 21, wherein said second pressure device comprises at least one inflatable bag (25), said inflatable bag (25) being expandable during operation of said drum (20) towards the drum surface.

23. A drum as claimed in claim 22, wherein said inflatable bag (25) is of annular shape, coaxial with said drum (20) and of bigger diameter.

24. A drum as claimed in claim 21, wherein said second pressure device comprises one or more presser rollers.

25. A drum as claimed in claim 15, wherein said tubular element (26) is made of an anti-adhesive elastic material.

## Patentansprüche

1. Verfahren zur Herstellung eines Reifens für Fahrzeugräder, wobei
- der Reifen (1) einen Karkassenaufbau mit wenigstens einer Karkassenlage (2) aufweist, die funktionsmäßig einem Paar von ringförmigen Verstärkungsaufbauten zugeordnet ist, die für das Zusammenpassen mit einer Montagefelge geeignet sind,
- jeder ringförmige Verstärkungsaufbau wenigstens einen Wulstkern (8) und ein ringförmiges Element (9) aufweist,
- die wenigsten eine Karkassenlage (2) wenigstens auf eines der ringförmigen Elemente (9) nach oben umgeschlagen ist, und
- das Verfahren die Schritte aufweist:
-- Zuführen wenigstens eines Halbfabrikats auf eine Trommel (20),
-- Anordnen wenigstens eines trennenden Elements (26) an einer Position radial außerhalb zu dem wenigstens einen Halbfabrikat,
-- Zuführen der wenigstens einen Karkassenlage (2) auf die Trommel (20) an einer radial äußeren Position bezogen auf das wenigstens eine trennende Element (26),
-- Anordnen der ringförmigen Elemente (9) an einer Position radial außerhalb der Karkassenlage (2),
-- nach oben Umschlagen der Karkassenlage (2) um die ringförmigen Elemente (9),
-- Entfernen des wenigstens einen trennenden Elements (26),
-- Anbringen der Wulstkerne (8),
-- Aufbringen eines Gurtaufbaus (7) auf den Karkassenaufbau an einer radial äußeren Position,
-- Aufbringen eines Laufflächenbandes (6) auf den Gurtaufbau (7) an einer radial äußeren Position, und
-- Formen des Reifens (1) zu einer torusförmigen Gestalt.

2. Verfahren nach Anspruch 1, bei welchem zwei trennende Elemente (26) auf dem Halbfabrikat durch eine Axialbewegung angeordnet werden, die von der Außenseite zur Innenseite von den gegenüberliegenden Enden der Trommel (20) aus gerichtet ist.

3. Verfahren nach Anspruch 1, bei welchem das radiale Aufeinanderlegen auf der Trommel (20) zwischen dem ersten Halbfabrikat und der Karkassenlage (2) an deren Kontaktpunkten durch eine Druckvorrichtung (21) verfestigt wird.

4. Verfahren nach Anspruch 1, bei welchem der Schritt des Nach-oben-Umschlagens der Karkassenlage (2) um die ringförmigen Elemente (9) eine Axialbewegung des wenigstens einen trennenden Elements (26) in Betracht zieht, um die Laschen (10) der Karkassenlage (2) anzuheben, wodurch jede der Laschen (10) zum Herumlegen um das jeweilige ringförmige Element (9) gebracht wird.

5. Verfahren nach Anspruch 4, bei welchem am Ende der Axialbewegung des wenigstens einen trennenden Elements (26) ein Schritt vorgesehen wird, während dem jeder Wulstkern (8) an einer radial äußeren Position bezogen auf jedes ringförmige Element (9) und an einer Position im Wesentlichen angrenzend und axial außerhalb von jeder der Laschen (10) angeordnet wird.

6. Verfahren nach Anspruch 5, bei welchem auf den Schritt des Entfemens des wenigstens einen trennenden Elements (26) ein Schritt folgt, bei welchem die Wulstkerne (8) an eine radial äußere Position bezüglich der ringförmigen Elemente (9) getragen werden, während jede Lasche (10) zwischen den Wulstkernen (8) und den Elementen (9) angeordnet ist.

7. Verfahren nach Anspruch 6, bei welchem ein Schritt zum Drücken der ringförmigen Elemente (9) und der darunter liegenden Halbfabrikate in eine radial äußere Richtung vorgesehen wird, während jeder Wulstkern (8) ortsfest in einer radialen Position gehalten wird.

8. Verfahren nach Anspruch 6, bei welchem ein Schritt zum Drücken der ringförmigen Elemente (9) und der darunter liegenden Halbfabrikate in eine radial äußere Richtung vorgesehen wird, während jeder Wulstkern (8) an der entsprechenden Lasche (10) reibt, wobei eine Zusammendrück- und Verfestigungswirkung des nach oben umgeschlagenen Abschnitts der Karkassenlage 82) um die ringförmigen Elemente (9) herum ausgeführt wird.

9. Verfahren nach Anspruch 7 oder 8, bei welchem der Drückschritt in eine radial äußere Richtung weitergeht, bis die Wulstkerne (8) und die ringförmigen Elemente (9) im Wesentlichen die gleiche radiale Position einnehmen, wobei jedes ringförmige Element (9) auf einer axial äußeren Position bezüglich des entsprechenden Wulstkerns (8) gehalten wird, jede Lasche (10) um das ringförmige Element (9) herumgelegt wird und eine Position radial innerhalb des Wulstkerns (8) beibehalten wird.

10. Verfahren nach Anspruch 4, bei welchem der Schritt des Nach-oben-Umschlagens jeder Lasche (10) um das jeweilige ringförmige Element (9) hauptsächlich durch Aufpumpen wenigstens eines aufpumpbaren Sacks (25) ausgeführt wird.

11. Verfahren nach Anspruch 4, bei welchem der Schritt des Nach-oben-Herumschlagens jeder Lasche (10) um das jeweiligen ringförmige Element (9) herum hauptsächlich mit Hilfe von Druckwalzen ausgeführt wird.

12. Verfahren nach Anspruch 1, bei welchem das ringförmige Element (9) einen Querschnitt mit einer langgestreckten Form hat, die sich an einem Ende verjüngt.

13. Verfahren nach Anspruch 1, bei welchem das ringförmige Element (9) aus elastomerem Material besteht.

14. Verfahren nach Anspruch 1, bei welchem alle Schritte auf der Trommel (20) ausgeführt werden.

15. Trommel zum Herstellen eines Reifens für Fahrzeugräder, wobei
- der Reifen (1) einen Karkassenaufbau mit wenigstens einer Karkassenlage (2) aufweist, die funktionsmäßig einem Paar von ringförmigen Verstärkungsaufbauten zugeordnet ist, die für das Zusammenpassen mit einer Montagefelge geeignet sind,
- jeder ringförmige Verstärkungsaufbau wenigstens einen Wulstkern (8) und ein ringförmiges Element (9) aufweist,
- die wenigstens eine Karkassenlage (2) wenigstens auf eines der ringförmigen Elemente (9) nach oben umgeschlagen wird, und
- die Trommel (20)
-- wenigstens einen zentralen Abschnitt (32), der funktionsmäßig den beiden Seitenabschnitten (34) zugeordnet ist,
-- wenigstens eine Transportvorrichtung (24) für die Wulstkerne (8),
-- wenigstens eine Druckvorrichtung, die für ein Verfestigen der verschiedenen Halbfabrikate miteinander angepasst ist,
-- wenigstens eine Vorrichtung (22) zum Umschlagen nach oben für die Karkassenlage (2), und
-- eine Vorrichtung (23) aufweist, die für ein radiales Modifizieren der Oberfläche der Trommel (20) angepasst ist,
-- wobei die Vorrichtung (22) zum Umschlagen nach oben wenigstens ein rohrförmiges trennendes Element (26) aufweist, das wenigstens an einem Ende offen ist und der Trommel (20) außen zugeordnet ist.

16. Trommel nach Anspruch 15, bei welcher die Druckvorrichtung eine Druckwalze (21) zum Verfestigen der Haftung zwischen der Karkassenlage (2) und wenigstens einem Halbfabrikat aufweist, das unter ihr angeordnet ist.

17. Trommel nach Anspruch 15, bei welcher die Vorrichtung (22) zum Umschlagen nach oben in zwei Hälften aufgeteilt ist, wobei jede Hälfte an einer axial äußeren Position auf gegenüberliegenden Seiten der Trommel (20) angeordnet ist und jede Hälfte das wenigstens eine rohrförmige trennende Element (26) aufweist.

18. Trommel nach Anspruch 17, bei welcher jede der Hälften axial beweglich und frei um die Achse der Trommel (20) drehbar ist.

19. Trommel nach Anspruch 17, bei welcher jedes rohrförmige Element (26) den gleichen Durchmesser hat wie die Trommel (20) oder einen kleineren Durchmesser als die Trommel (20) hat.

20. Trommel nach Anspruch 17, bei welchem eine Vielzahl von am Umfang angeordneten fadenförmigen Elementen um jedes schlauchförmige Element (26) herum vorgesehen ist.

21. Trommel nach Anspruch 15, bei welcher der Vorrichtung (22) zum Umschlagen nach oben eine zweite Druckvorrichtung zugeordnet ist.

22. Trommel nach Anspruch 21, bei welcher die zweite Druckvorrichtung wenigstens einen aufpumpbaren Sack (25) aufweist, der während des Betriebs der Trommel (20) zu der Trommelfläche hin aufweitbar ist.

23. Trommel nach Anspruch 22, bei welcher der aufpumpbare Sack (25) eine Ringform hat, zur Trommel (25) koaxial ist und einen größeren Durchmesser hat.

24. Trommel nach Anspruch 21, bei welcher die zweite Druckvorrichtung eine oder mehrere Druckwalzen aufweist.

25. Trommel nach Anspruch 15, bei welcher das rohrförmige Element (26) aus einem antiadhäsiven elastischen Material hergestellt ist.

## Revendications

1. Procédé de fabrication d'un pneu pour roues de véhicules, ledit pneu (1) comprenant une structure de carcasse ayant au moins une nappe de carcasse (2) associée fonctionnellement à une paire de structures de renforcement annulaires prévues pour s'adapter à une jante, chaque structure de renforcement annulaire comprenant au moins une tringle (8) et un élément annulaire (9), ladite au moins une nappe de carcasse (2) étant tournée vers le haut au moins sur l'un desdits éléments annulaires (9), ledit procédé comprenant les étapes consistant à : amener au moins un produit semi-fini sur un tambour (20), placer au moins un élément de séparation (26) en une position radialement extérieure par rapport audit au moins un produit semi-fini, amener ladite au moins une nappe de carcasse (2) sur ledit tambour (20) en une position radialement extérieure par rapport audit au moins un élément de séparation (26), placer lesdits éléments annulaires (9) en une position radialement extérieure sur ladite nappe de carcasse (2), tourner vers le haut ladite nappe de carcasse (2) autour desdits éléments annulaires (9), retirer ledit au moins un élément de séparation (26), appliquer lesdites tringles (8), appliquer une structure de ceinture (7) sur ladite structure de carcasse en une position radialement extérieure, appliquer une bande de roulement (6) sur ladite structure de ceinture (7) en une position radialement extérieure, donner audit pneu (1) une conformation toroïdale.

2. Procédé selon la revendication 1, dans lequel deux éléments de séparation (26) sont placés sur ledit produit semi-fini par un mouvement axial dirigé de l'extérieur vers l'intérieur depuis des extrémités opposées dudit tambour (20).

3. Procédé selon la revendication 1, dans lequel la superposition radiale sur ledit tambour (20) entre ledit premier produit semi-fini et ladite nappe de carcasse (2) est consolidée aux points de contact de ces derniers par un dispositif de pression (21).

4. Procédé selon la revendication 1, dans lequel ladite étape consistant à tourner vers le haut ladite nappe de carcasse (2) autour desdits éléments annulaires (9) prend en compte un mouvement axial dudit au moins un élément de séparation (26), pour soulever les rebords (10) de ladite nappe de carcasse (2), provoquant ainsi l'enroulement de chacun desdits rebords (10) autour de l'élément annulaire (9) respectif.

5. Procédé selon la revendication 4, dans lequel, à la fin dudit mouvement axial dudit au moins un élément de séparation (26), une étape est prévue, durant laquelle chaque tringle (8) est placée en une position radialement extérieure par rapport à chaque élément annulaire (9) et en une position substantiellement adjacente et axialement extérieure à chacun desdits rebords (10).

6. Procédé selon la revendication 5, dans lequel l'étape de retrait dudit au moins un élément de séparation (26) est suivie d'une étape de transfert desdites tringles (8) jusqu'à une position radialement extérieure par rapport auxdits éléments annulaires (9), tandis que chaque rebord (10) est intercalé entre lesdites tringles (8) et lesdits éléments (9).

7. Procédé selon la revendication 6, dans lequel une étape est prévue pour pousser lesdits éléments annulaires (9) et les produits semi-finis sous-jacents dans une direction radialement extérieure, pendant que chaque tringle (8) est maintenue immobile dans une position radiale.

8. Procédé selon la revendication 6, dans lequel une étape est prévue pour pousser lesdits éléments annulaires (9) et les produits semi-finis sous-jacents dans une direction radialement extérieure, pendant que chaque tringle (8) frotte sur le rebord (10) correspondant en apportant une action de compression et de consolidation de la partie retournée de ladite nappe de carcasse (2) autour desdits éléments annulaires (9).

9. Procédé selon la revendication 7 ou 8, dans lequel ladite étape de poussée dans une direction radialement extérieure se poursuit jusqu'à ce que lesdites tringles (8) et lesdits éléments annulaires (9) prennent substantiellement la même position radiale, chaque élément annulaire (9) étant maintenu en une position axialement extérieure par rapport à la tringle (8) correspondante, chaque rebord (10) étant enroulé autour dudit élément annulaire (9) et maintenant une position radialement intérieure par rapport à ladite tringle (8).

10. Procédé selon la revendication 4, dans lequel l'étape consistant à tourner vers le haut chaque rebord (10) autour de l'élément annulaire (9) respectif est exécutée principalement par le biais du gonflage d'au moins un sac gonflable (25).

11. Procédé selon la revendication 4, dans lequel l'étape consistant à tourner vers le haut chaque rebord (10) autour de l'élément annulaire (9) respectif est exécutée principalement au moyen de roulettes de pressage.

12. Procédé selon la revendication 1, dans lequel ledit élément annulaire (9) a une section transversale de forme allongée qui se rétrécit à une extrémité.

13. Procédé selon la revendication 1, dans lequel ledit élément annulaire (9) est en matériau élastomère.

14. Procédé selon la revendication 1, dans lequel toutes lesdites étapes sont exécutées sur ledit tambour (20).

15. Tambour pour la fabrication d'un pneu pour roues de véhicules, ledit pneu (1) comprenant une structure de carcasse ayant au moins une nappe de carcasse (2) associée fonctionnellement à une paire de structures de renforcement annulaires prévues pour s'adapter à une jante, chaque structure de renforcement annulaire comprenant au moins une tringle (8) et un élément annulaire (9), ladite au moins une nappe de carcasse (2) étant tournée vers le haut au moins sur l'un desdits éléments annulaires (9), ledit tambour (20) comprenant au moins : une partie centrale (32) associée fonctionnellement à deux parties latérales (34), au moins un dispositif de transport (24) pour lesdites tringles (8), au moins un dispositif de pression conçu pour consolider les différents produits semi-finis entre eux, au moins un dispositif de retournement (22) pour ladite nappe de carcasse (2) et un dispositif (23) conçu pour modifier radialement la surface dudit tambour (20), dans lequel ledit dispositif de retournement (22) comprend au moins un élément de séparation tubulaire (26) ouvert au moins à une extrémité, associé extérieurement audit tambour (20).

16. Tambour selon la revendication 15, dans lequel ledit dispositif de pression comprend une roulette de pressage (21) pour consolider l'adhésion entre ladite nappe de carcasse (2) et au moins un produit semi-fini placé dessous.

17. Tambour selon la revendication 15, dans lequel ledit dispositif de retournement (22) est divisé en deux moitiés, chaque moitié étant placée en une position axialement extérieure sur des côtés opposés dudit tambour (20) et chaque moitié comprenant ledit au moins un élément de séparation tubulaire (26).

18. Tambour selon la revendication 17, dans lequel chacune desdites moitiés est mobile axialement et peut tourner librement autour de l'axe dudit tambour (20).

19. Tambour selon la revendication 17, dans lequel chaque élément tubulaire (26) a un diamètre inférieur ou égal au diamètre dudit tambour (20).

20. Tambour selon la revendication 17, dans lequel une pluralité d'éléments de type fils disposés dans le sens de la circonférence est placée autour de chaque élément tubulaire (26).

21. Tambour selon la revendication 15, dans lequel un deuxième dispositif de pression est associé audit dispositif de retournement (22).

22. Tambour selon la revendication 21, dans lequel ledit deuxième dispositif de pression comprend au moins un sac gonflable (25), ledit sac gonflable (25) pouvant être dilaté pendant le fonctionnement dudit tambour (20) vers la surface du tambour.

23. Tambour selon la revendication 22, dans lequel ledit sac gonflable (25) est de forme annulaire, coaxial avec ledit tambour (20) et de diamètre supérieur.

24. Tambour selon la revendication 21, dans lequel ledit deuxième dispositif de pression comprend une ou plusieurs roulettes de pressage.

25. Tambour selon la revendication 15, dans lequel ledit élément tubulaire (26) est fait d'un matériau élastique antiadhésif.
